# EUROPÄISCHE PATENTANMELDUNG

(11) **EP 0 887 539 A2**
(43) Veröffentlichungstag der Anmeldung: **30.12.1998**
(21) Anmeldenummer: 98810410.5
(22) Anmeldetag: 07.05.1998
(51) Int. Cl.: F02K 3/08

(54) **Strahltriebwerk**

(30) Priorität: 26.06.1997 DE 19726975
(71) Anmelder: Asea Brown Boveri AG, 5401 Baden (CH)
(72) Erfinder: Vogeler, Konrad, Dr., 79790 Küssaberg/Rheinheim (DE)

(57) **Zusammenfassung**

Bei einem Strahltriebwerk mit einem Fan (9) herkömmlicher Art wird stromab der Turbine (4) eine zweite Brennkammer (5) vorgesehen, und stromab dieser zweiten Brennkammer (5) wirkt eine zweite Turbine (6). In dieser zweiten Brennkammer (5) werden dann die in der ersten Turbine (4) teilentspannten Heissgase (16) nochmals auf Temperatur gebracht, womit dann, bei niedriger absoluter Heissgastemperatur mehr Leistung im Triebwerk zur Verfügung steht.

## Beschreibung

### Technisches Gebiet

Die vorliegende Erfindung betrifft ein Strahltriebwerk gemäss Oberbegriff des Anspruchs 1.

### Stand der Technik

Heutige Stahltriebwerke kennen ein- oder mehrwellige Anordnungen. Typischerweise zerfällt die Gasturbogruppe in eine Hoch- und Niederdruckkomponente. Die Hochdruckkomponente besteht aus einem Hochdruckverdichter, einer Brennkammereinheit und einer Hochdruckturbine. Verdichter und Turbine der Hochdruckkomponente sind auf einer gemeinsamen Rotorwelle befestigt. Vor dem Hochdruckverdichter befindet sich ein Niederdruckverdichter und im Fall eines Nebenstromtriebwerkes ein Fan. Im Anschluss an die Hochdruckturbine ist direkt eine Niederdruckturbine angeordnet. Der Fan, der Niederdruckverdichter und die Niederdruckturbine bilden die Niederdruckkomponente des Triebwerkes. Diese kann mit der Hochdruckkomponente auf einer gemeinsamen Rotorwelle angeordnet sein. Bei modernen Hochleistungstriebwerken besitzt die Hochdruckkomponente aber in der Regel eine eigene, zweite, bisweilen sogar eine dritte Rotorwelle, die in der Hochdruck-Rotorwelle koaxial gelagert läuft. Auf diese Weise können für Nieder- und Hochdruckteil verschiedene Drehzahlen realisiert werden.

Allen Bauarten ist gemeinsam, dass sie nur eine einzige Brennkammereinheit nach der Verdichtergruppe aufweisen.

Die maximal in dieser Brennkammereinheit zulässige Verbrennungstemperatur ist technologisch bedingt. Sie ist in der letzten Jahren kontinuierlich gesteigert worden. Die Kombination von Kühltechnik und Material in der Gasturbine und die verwendete Verbrennungstechnik in der Brennkammereinheit zwecks Einhaltung der gesetzlich zulässigen Schadstoff-Emissionen setzen hier die Grenzen. Demnach ist für einen durch die Prozessführung im Triebwerk am Brennkammereintritt vorgegebenen Massenstrom die mögliche Energiezufuhr mit dem Brennstoff durch diese maximal zulässige Verbrennungstemperatur begrenzt. Dadurch ist auch die Gesamtleistung des Triebwerks für eine gegebene Massenstromaufteilung begrenzt.

### Darstellung der Erfindung

Hier will die Erfindung Abhilfe schaffen. Der Erfindung, wie sie in den Ansprüchen gekennzeichnet ist, liegt die Aufgabe zugrunde bei einem Strahltriebwerk der eingangs genannten Art die oben beschriebene technologisch gegebene Leistungsgrenze durch Beschreitung neuer Wege hinauszuschieben, um grössere Leistungen bei gleichem Technologieniveau zu erreichen.

Ein wesentlicher Vorteile der Erfindung ist zunächst darin zu sehen, dass das erfindungsgemässe Triebwerk bei gleicher Leistung im Vergleich zu einem Triebwerk nach dem Stand der heutigen Technik einen deutlich verringerten Brennstoffverbrauch aufweist, womit dann nicht nur der Wirkungsgrad steigt, sondern auch die spezifischen Schadstoff-Emissionen markant abnehmen.

Ein weiterer wesentlicher Vorteil der Erfindung steht im Zusammenhang mit dem Verhältnis von Neben- und Innenstrom: Je grösser dieses Verhältnis ist, um so günstiger ist der Brennstoffverbrauch eines Triebwerks. Dazu muss möglichst viel Leistung im Fan zur Verfügung stehen, welche im Nebenstromverhältnis in Schub umgesetzt wird.

Die Vorteile der Erfindung sind sodann gewichtig darin zu sehen, dass eine zweite Brennkammer vorgesehen wird, in welcher die in ersten Turbine teilentspannten Heissgase nochmals auf Temperatur gebracht werden, womit dann, bei gleicher maximale Heissgastemperatur mehr Leistung im Triebwerk zur Verfügung steht.

Vorteilhafte und zweckmässige Weiterbildungen der erfindungsgemässen Aufgabenlösung sind in den weitern abhängigen Ansprüchen gekennzeichnet.

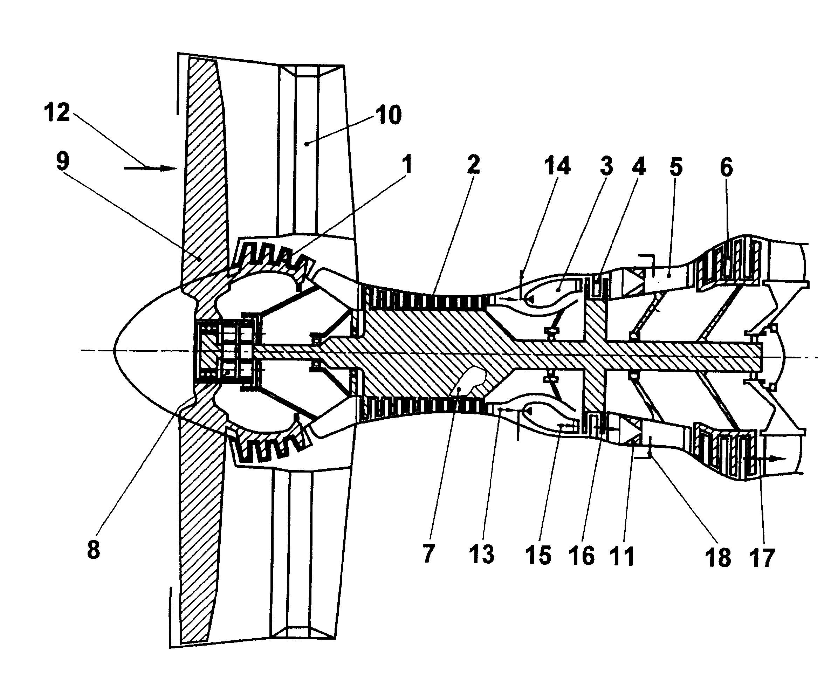

Im folgenden wird anhand der Zeichnung ein Ausführungsbeispiel der Erfindung näher erläutert. Alle für das unmittelbare Verständnis der Erfindung nicht erforderlichen Elemente sind fortgelassen worden. Die Strömungsrichtung der Medien ist mit Pfeilen angegeben.

### Kurze Beschreibung der Zeichnung

Die einzige Figur zeigt einen Querschnitt durch ein Strahltriebwerk in Nebenstromausführung.

### Wege zur Ausführung der Erfindung, gewerbliche Verwendbarkeit

Bei dem gezeigten Triebwerk, das durch eine einzige Rotorwelle 7 charakterisiert ist, wird die angesaugte Luft 12 in einem Fan 9, in einem Niederdruckverdichter 1 und anschliessend in einem Hochdruckverdichter 2 komprimiert. Diese komprimierte Luft 13 strömt dann in eine erste Brennkammer 3, in welcher durch die Zufuhr vorzugsweise eines flüssigen Brennstoffs 14 die technologisch maximal zulässige Temperatur bewerkstelligt wird. Das in dieser Brennkammer 3 bereitgestellte Heissgas 15 wird in einer ersten Turbine 4 teilentspannt und gibt Leistung an die Rotorwelle 7 ab. Die teilentspannten Heissgase 16 verlassen die erste Turbine 4 mit einer niedrigeren Temperatur und strömen sodann in eine zweite Brennkammer 5, in welcher diese Heissgase 16 ein zweites Mal auf die Maximaltemperatur aufbereitet werden. Auf die Verbrennungstechniken in der ersten und zweiten Brennkammer wird weiter unten näher eingegangen. Nachdem die Gase in der zweiten Brennkammer 5 wieder auf Maximaltemperatur erwärmt worden sind, erfolgt anschliessend deren Entspannung in einer nachgeschalteten zweiten Turbine 6, mit entsprechender Leistungsabgabe an die Rotorwelle 7. Durch eine in der Zeichnung nicht näher gezeigte Schubdüse verlassen sodann die schlussentspannten Gase 17, also die Abgase, das Triebwerk. Ein Teil der Wellenleistung wird durch den auf der Rotorwelle 7 angebrachten Hochdruckverdichter 2 abgenommen. Da die Rotorwelle für den Fan 9 eine zu hohe Drehzahl aufweist, wird diese zu Gunsten des letztgenannten durch ein Getriebe 8 soweit herabgesetzt, dass der Fan 9 dann mechanisch sicher beherrscht wird. Der Fan 9 verdichtet den in das Triebwerk eintretende Luftmassenstrom 12 in einer ersten Stufe, danach teilt sich dieser Massenstrom in einen Innenstrom und einen Nebenstrom. Der Nebenstrom expandiert dann in einer Nebenstromdüse 10 und trägt wesentlich zum Gesamtschub des Triebwerks bei.
Je grösser das Verhältnis von Nebenstrom und Innenstrom ist, um so günstiger ist der Brennstoffverbrauch eines Triebwerks. So gesehen, kommt es also darauf an, möglichst viel Leistung im Fan 9 zur Verfügung zu haben, dies folgerichtig um ein grosses Nebenstromverhältnis zu realisieren.
Die Verdichtung bis auf den Enddruck, der gleichzeitig auch der Maximaldruck im Triebwerk bildet, muss in jedem Fall vor der ersten Brennkammer abgeschlossen sein.

Die Begründung für das vorgeschlagene Einwellenprinzip ist darin zu sehen, dass bei einem Mehrwellentriebwerk die Hochdruckturbine auf der Hochdruckwelle aus dem Gasstrom soviel Leistung zum Antrieb des Hochdruckverdichters entnehmen muss, dass der Druck dann hinter der Hochdruckturbine für eine weitere Leistungszufuhr in der zweiten Brennkammer bis zur Maximaltemperatur nicht mehr hoch genug ist, um diese Leistung in der Niederdruckturbine hinreichend abzubauen. Das Ergebnis aus einer solchen Konfiguration wäre dann ein unakzeptabel niedriger Wirkungsgrad der Anlage.
Demgegenüber, wenn die ganze Gasturbogruppe des Triebwerks auf einer einzigen Rotorwelle 7 angeordnet ist, kann die Niederdruckturbine 6 zum Antrieb des Hochdruckverdichters 2 beitragen, womit die Leistungsaufteilung günstiger gestaltet werden kann. Die überschüssige Wellenleistung wird über das Getriebe 8 dem langsamer laufenden Fan 9 zugeführt. Die Anzahl Lagerungen der Rotorwelle 7 wird von Fall zu Fall ausgelegt.
Zur besseren Reaktion auf unterschiedlichen Leistungsbedarf kann der Fan 9 auch mit verstellbaren Schaufeln ausgerüstet werden. Ferner kann es für besondere Anwendungen sinnvoll sein, den Fan 9 mehrstufig auszuführen, um bei kleinen Nebenstromverhältnissen den Leistungsüberschuss der Turbine mit gutem Wirkungsgrad in Schub umzusetzen.

Die erste Brennkammer 3 ist vorzugsweise von ringförmiger Konfiguration, wobei diese Brennkammer auch aus einer Anzahl axial, quasi-axial oder schraubenförmig um die Rotorwelle 7 angeordneter und in sich abgeschlossener Brennräume bestehen kann. Die hier zugrundegelegte ringförmige Brennkammer 3 weist kopfseitig, auf den Umfang verteilt, eine Anzahl von nicht näher dargestellten Brennern auf, welche die Heissgaserzeugung bewerkstelligen. An sich können hier Diffusionsbrenner zum Einsatz gelangen. Im Sinne einer Reduzierung der Schadstoff-Emissionen aus dieser Verbrennung, insbesondere was die NOx-Emissionen betrifft, ist es vorteilhaft, eine Anordnung von Vormischbrennern gemäss EP-PS-0 321 809 vorzusehen, wobei der Erfindungsgegenstand aus dieser Druckschrift integrierender Bestandteil dieser Beschreibung ist.
Was die Anordnung der Vormischbrenner in Umfangsrichtung der ringförmigen Brennkammer 3 anbelangt, so kann eine solche bei Bedarf von der üblichen Konfiguration gleicher an den Umfang verteilter Brenner abweichen. Stattdessen können unterschiedlich grosse Vormischbrenner zum Einsatz kommen. Dies geschieht vorzugsweise so, dass jeweils zwischen zwei grossen Vormischbrennern ein kleiner Vormischbrenner vorzugsweise gleicher Konfiguration disponiert ist. Die grossen Vormischbrenner, welche die Funktion von Hauptbrennern zu erfüllen haben, stehen zu den kleinen Vormischbrennern, welche die Pilotbrenner dieser Brennkammer sind, bezüglich der sie durchströmenden Brennerluft, also der verdichteten Luft aus der Verdichtereinheit, in einem Grössenverhältnis, das fallweise festgelegt wird. Im gesamten Lastbereich der Brennkammer arbeiten die Pilotbrenner als selbstgängige Vormischbrenner, wobei die Luftzahl fast konstant bleibt. Weil die Pilotbrenner im ganzen Lastbereich bei idealem Gemisch gefahren werden können, sind die NOx-Emissionen auch bei Teillast sehr gering. Bei einer solchen Konstellation kommen die umlaufenden Stromlinien im Frontbereich der ringförmigen Brennkammer 3 sehr nahe an die Wirbelzentren der Pilotbrenner heran, so dass eine Zündung an sich nur mit diesen Pilotbrennem möglich ist. Beim Hochfahren der Leistung wird die Brennstoffmenge, die über die Pilotbrenner zugeführt wird, soweit gesteigert, bis die Pilotbrenner angesteuert sind, d.h. bis die volle Brennstoffmenge zur Verfügung steht.
Bei der Spitzenlast des Triebwerks sind sonach auch die Hauptbrenner voll angesteuert. Weil die durch die Pilotbrenner initierte Konfiguration "kleiner" heisser Wirbelzentren zwischen den von den Hauptbrennern stammenden "grossen" kühleren Wirbelzentren extrem instabil ausfällt, wird auch bei mager betriebenen Hauptbrennern im Teillastbereich ein sehr guter Ausbrand mit zusätzlich zu den NOx-Emissionen niedrigen CO- und UHC-Emissionen erreicht, d.h. die heissen Wirbel der Pilotbrenner dringen sofort in die kleinen Wirbel der Hauptbrenner ein.

Die Heissgasen 15 aus der ringförmigen Brennkammer 3 beaufschlagen die unmittelbar nachgeschaltete erste Turbine 4, deren kalorisch entspannende Wirkung auf die Heissgase variabel gehalten werden kann.

Die Auslegung dieser ersten Turbine 4 beeinflusst die Temperatur der teilentspannten Heissgase 16, somit, ob die zweite Brennkammer 5, in Interdependenz zum dort eingesetzten Brennstoff, nach einem Selbstzündungprozess betrieben werden kann.
Diese zweite Brennkammer 5 hat hier im wesentlichen die Form eines zusammenhängenden ringförmigen axialen oder quasi-axialen Zylinders.
Was die Konfiguration der ringförmigen, aus einem einzigen Brennraum bestehenden Brennkammer 5 betrifft, so sind in Umfangsrichtung dieses ringförmigen Zylinders mehrere Brennstofflanzen 18 disponiert, welche vorzugsweise über eine nicht näher dargestellten Ringleitung miteinander verbunden sind. Bei Auslegung dieser zweiten Brennkammer 5 auf Selbstzündung weist diese an sich keinen Brenner auf: Die Verbrennung der aus der Turbine 4 kommenden teilentspannten Heissgase 16 geschieht hier durch Selbstzündung. Beim Einsatz eines flüssigen Brennstoffes sind Temperaturen in der Grössenordnung von 800°C ausreichend für einen auf Selbstzündung basierenden Betrieb.

Um die Betriebssicherheit und einen hohen Wirkungsgrad bei einer auf Selbstzündung ausgelegten Brennkammer zu gewährleisten, ist es eminent wichtig, dass die Flammenfront örtlich stabil bleibt. Zu diesem Zweck werden in dieser Brennkammer 5, vorzugsweise an der Innen- und Aussenwand in Umfangsrichtung disponiert, eine Reihe von wirbelerzeugenden Elementen 11 vorgesehen, welche in axialer Richtung vorzugsweise stromauf der Brennstofflanzen 18 angeordnet sind. Die Aufgabe dieser sogenannten Wirbelgeneratoren 11 besteht darin, nachhaltige Wirbel zu erzeugen, welche eine Rückströmzone in Anlehnung zu EP-PS 0 321 809 induzieren. Da es sich bei dieser Brennkammer 5, aufgrund der axialen Anordnung und der Baulänge, um eine Hochgeschwindigkeitsbrennkammer handelt, deren mittlere Geschwindigkeit grösser ca. 60 m/s beträgt, müssen die Wirbelgeneratoren 11 strömungskonform ausgebildet werden. Anströmungsseitig sollen diese vorzugsweise aus einer tetraederförmigen Form mit anströmungsschiefen Flächen bestehen. Die Wirbelgeneratoren 11 können entweder an der Aussenfläche oder an der Innenfläche der Brennkammer 5 plaziert sein, oder, wie die Figur zeigt, beiderorts wirken. Am dargestellten Beispiel aus der Figur ist des weiteren ersichtlich, dass die schiefen Flächen zwischen den aussenliegenden und innenliegenden Wirbelgeneratoren 11 vorzugsweise spiegelbildlich angeordnet sind, dergestalt, dass der Durchflussquerschnitt der Brennkammer 5 stromab dieses Ortes im Bereich der Eindüsung des Brennstoffes 18 eine wirbelerzeugende Erweiterung erfährt. Selbstverständlich können die Wirbelgeneratoren 11 auch axial zueinander verschoben sein. Die abströmungsseitige Fläche der Wirbelgeneratoren 11 ist im wesentlichen radial ausgebildet, so dass sich ab dort eine Rückströmzone einstellt. Wird für eine Selbstzündung in der Brennkammer 5 optiert, so muss eine solche über alle Lastbereiche sichergestellt sein, so dass hilfsweise Hilfsvorkehrungen resp. Hilfseinrichtungen vorgesehen werden, welche dann zündend eingreifen, wenn die Selbstzündung aus irgendeinem Grund nicht mehr gewährleistet wäre.

Die kurze Baulänge der Brennkammer 5, die Wirkung der Wirbelgeneratoren 11 zur Flammenstabilisierung sowie die fortwährende Sicherstellung der Selbstzündung sind mitverantwortlich, dass die Verbrennung sehr rasch erfolgt, und die Verweilzeit des Brennstoffes im Bereich der heissen Flammenfront minimal bleibt. Eine unmittelbar verbrennungsspezifisch messbare Wirkung hieraus betrifft die NOx-Emissionen, welche eine Minimierung erfahren, dergestalt, dass sie nunmehr kein Thema mehr bilden. Diese Ausgangslage ermöglicht ferner, den Ort der Verbrennung klar zu definieren, was sich auf eine optimierte Kühlung der Strukturen dieser Brennkammer 5 niederschlägt. Die in der Brennkammer 5 aufbereiteten Heissgase beaufschlagen anschliessend, wie bereits oben ausgeführt, die nachgeschaltete zweite Turbine 6.

Es ist zur Steigerung des Wirkungsgrades des Triebwerks von Vorteil, wenn vor der zweiten Brennkammer 5 ein in der Figur nicht ersichtlicher Kleindiffusor vorgesehen wird. Damit lässt sich der Totaldruckverlust im Gesamtsystem vermindern. Es lässt sich anhand der üblichen Diffusorauslegungsdiagramme beweisen, dass sich bereits bei einer minimalen Länge des Diffusors grosse Rückgewinnungsraten des dynamisches Druckes erreichen lassen.

Schliesslich kann die zweite ringförmige Brennkammer 5 eine in Umfangsrichtung ausgelegte Unterteilung aufweisen, dergestalt, dass eine Anzahl einzelner nebengeordneter Brennräume die Heissgaserzeugung aufrechterhalten. Die einzelnen um die Rotorwelle 7 disponierten Brennräume können eine autonome Teilheissgaserzeugung aufweisen, oder in eine verbrennungstechnisch optimale Interdependenz zueinander stehen.

### Bezeichnungsliste

- 1: Niederdruckverdichter
- 2: Hochdruckverdichter
- 3: Erste Brennkammer
- 4: Erste Turbine, Hochdruckturbine
- 5: Zweite Brennkammer
- 6: Zweite Turbine, Niederdruckturbine
- 7: Rotorwelle
- 8: Getriebe
- 9: Fan, Nebenstromverdichter
- 10: Nebenstromdüse
- 11: Wirbelgeneratoren
- 12: Angesaugte Luft, Luftmassenstrom
- 13: Verdichtete Luft
- 14: Brennstoff, Brennstoffzufuhr
- 15: Heissgase
- 16: Teilentspannte Heissgase
- 17: Schlussentspannte Gase, Abgase
- 18: Brennstoff, Brennstofflanzen

## Patentansprüche

1. Strahltriebwerk, im wesentlichen bestehend aus mindestens einem Fan (9), mindestens einer dem Fan nachgeschalteten Verdichtereinheit (1, 2), einer der Verdichtereinheit nachgeschalteten Brennkammer (3), einer der Brennkammer nachgeschalteten Turbine (4), dadurch gekennzeichnet, dass stromab der Turbine (4) eine zweite Brennkammer (5) und stromab dieser zweiten Brennkammer (5) eine zweite Turbine (6) angeordnet sind.

2. Strahltriebwerk nach Anspruch 1, dadurch gekennzeichnet, dass der Fan (9) mit verstellbaren Schaufeln ausgerüstet ist.

3. Strahltriebwerk nach Anspruch 1, dadurch gekennzeichnet, dass der Fan (9) mehrstufig ausgebildet ist.

4. Stahltriebwerk nach Anspruch 1, dadurch gekennzeichnet, dass mindestens ein zur Verdichtereinheit gehörender Verdichter (2), die erste Turbine (4) und die zweite Turbine (6) auf einer gemeinsamen Rotorwelle (7) angeordnet sind.

5. Strahltriebwerk nach Anspruch 1, dadurch gekenzeichnet, dass sämtliche Strömungsmaschinen (9, 1, 2, 4, 6) des Stahltriebwerks auf mindestens zwei in Wirkverbindung zueinander stehenden Rotorwellen angeordnet sind.

6. Strahltriebwerk nach Anspruch 5, dadurch gekennzeichnet, dass die Wirkverbindung der Rotorwellen durch mindestens ein Getriebe (8) erstellbar ist.

7. Strahltriebwerk nach Anspruch 1, dadurch gekennzeichnet, dass die zweite Brennkammer (5) als selbstzündende Brennkammer ausgebildet ist.

8. Strahltriebwerk nach Anspruch 1, dadurch gekennzeichnet, dass stromauf der zweiten Brennkammer (5) ein Diffusor angeordnet ist.

9. Strahltriebwerk nach Anspruch 1, dadurch gekennzeichnet, dass die zweite Brennkammer mit wirbelerzeugenden Elementen (11) bestückt ist.

10. Strahltriebwerk nach Anspruch 9, dadurch gekennzeichnet, dass die abströmungsseitigen Flächen der wirbelerzeugenden Elemente (11) einen Querschnittssprung bilden.

11. Strahltriebwerk nach den Ansprüchen 1 und 9, dadurch gekennzeichnet, dass in der zweiten Brennkammer (5) stromab der wirbelerzeugenden Elemente (11) ein Hauptbrennstoff (18) eindüsbar ist.

12. Strahltriebwerk nach Anspruch 11, dadurch gekennzeichnet, dass der Hauptbrennstoff (18) über eine Anzahl Brennstofflanzen einbringbar ist, und dass die Brennstofflanzen in Umfangsrichtung der zweiten Brennkammmer (5) angeordnet sind.

13. Strahltriebwerk nach Anspruch 1, dadurch gekennzeichnet, dass die erste Brennkammer (3) mit einer Anzahl Vormischbrenner betreibbar ist.

14. Strahltriebwerk nach Anspruch 1, dadurch gekennzeichnet, dass die erste und die zweite Brennkammer (3, 5) als Ringbrennkammern ausgebildet sind.

15. Strahltriebwerk nach Anspruch 1, dadurch gekennzeichnet, dass die erste und/oder zweite Brennkammer (3, 5) aus einer Anzahl einzelner rohrförmiger um die Rotorwelle (7) angeordneter Brennräume bestehen.

16. Verfahren zum Betrieb eines Strahltriebwerkes nach Anspruch 1, dadurch gekennzeichnet, dass die Entspannung der Heissgase (15) in der ersten Turbine (4) minimiert wird, dass die teilentspannten Heissgase (16) in die nachgeschaltete zweite Brennkammer (5) mit einer Temperatur einströmen, welche oberhalb der Selbstzündungstemperatur eines dort eingedüsten Hauptbrennstoffes (18) liegt.

17. Verfahren nach Anspruch 16, dadurch gekennzeichnet, dass mindestens in den transienten Lastbereichen und im Teillastbetrieb die zweite Brennkammer (5) Hilfsvorkehrungen oder Hilfseinrichtungen aufweist, mit welchen die Verbrennung sichergestellt wird.
